# EUROPÄISCHE PATENTSCHRIFT

(11) **EP 2 001 223 B1**
(45) Veröffentlichungstag und Bekanntmachung des Hinweises auf die Patenterteilung: **21.09.2016**
(21) Anmeldenummer: 07010957.4
(22) Anmeldetag: 04.06.2007
(51) Int. Cl.: H04N 5/445, G06F 3/048

(54) **Multimedia-Anordnung**
Multi-media configuration
Agencement multimédia

(43) Veröffentlichungstag der Anmeldung: 10.12.2008
(73) Patentinhaber: fm marketing gmbh, 5162 Obertrum am See (AT)
(72) Erfinder: Maier, Ferdinand, 5162 Obertrum am See (AT)
(74) Vertreter: von Bülow, Tam

(56) Entgegenhaltungen:
- WO-A-03/021915
- WO-A-03/043318
- WO-A-2004/055717
- WO-A1-2006/053324
- US-A1- 2002 043 557
- US-A1- 2003 001 907
- US-B1- 6 690 391

## Beschreibung

Die Erfindung betrifft eine Multimedia-Anordnung gemäß dem Oberbegriff des Patentanspruches 1. Eine solche Multimedia-Anordnung ist aus der WO 2004/055717 A1 bekannt. Diese bekannte Multimedia-Anordnung hat eine Fernsteuerung, die eine Tastatur, einen ersten Mikroprozessor, mindestens einen ersten Speicher, eine Identifikationseinrichtung, die biometrische Daten einer Person erfaßt, und eine Sende-/Empfangseinheit zur bidirektionalen Datenübertragung aufweist sowie ein Multimedia-Gerät, das einen zweiten Mikroprozessor, eine zweite Sende-/Empfangseinheit, mindestens einen zweiten Speicher zur Speicherung eines Benutzerprofils, und mindestens eine Schnittstelle aufweist und mit einem Anzeigegerät, das mit dem Multimedia-Gerät verbunden ist. Durch die Identifikationseinrichtung wird sichergestellt, daß innerhalb des Multimedia-Geräts nur eine Verarbeitung von Steuersignalen stattfindet, wenn korrekte Signale der Identifikationseinrichtung empfangen wurden.

Die US 2003/001907 A1 beschreibt ein steuerbares Bildschirmmenü mit einer horizontalen und einer vertikalen Liste von Objekten, die sich in einem ortsfesten Fokusfeld überlappen, wobei die Navigation mit Hilfe einer Fernbedienung mit fünf Funktionstasten erfolgt. Die Menüstruktur hat mehrere Hierarchieebenen, die je nach gewünschter Funktion unterschiedlich tief gestaffelt sind.

Die US 2002/043557 A1 zeigt eine Fernbedienung für Multimedia-Geräte mit einer "Smartcard", die einen Speicher mit Identifikationsdaten, wie z.B. ein Passwort enthält, wobei das fernzusteuernde Gerät Steuerbefehle nur dann ausführt, wenn die Identifikationsdaten zuvor korrekt empfangen wurden.

Die WO 02/17627 A2 beschreibt eine Fernsteuerung für eine Set-Top-Box, die für die jeweiligen Benutzer personalisiert werden kann, was durch biometrische Eigenschaften des Benutzers erfolgt, wie z.B. einen Fingerabdruckleser, einen Stimmerkennungsschaltkreis, eine Iris-Abtasteinrichtung, eine "Schnüffeleinrichtung" oder eine Gesichtserkennungseinrichtung. Als Alternative zu einer automatischen Personalisierung kann der jeweilige Benutzer auch aufgefordert werden, ein Passwort, eine bestimmte Tastenfolge oder ähnliches einzugeben. Damit kann innerhalb einer Familie oder eines Haushaltes mit einer einzigen Fernsteuerung eine Set-Top-Box und sonstige Heimunterhaltungageräte, wie z.B. Videorecorder, CD-Player,

Die Druckschrift WO 2006/053324 A1 offenbart ein Verfahren mit den Schritten Bereitstellen einer Fernsteuerungseinheit um einem Benutzer zu ermöglichen Steuerungssignale an ein elektronisches Gerät zu versenden, wenn der Benutzer von dem elektronischen Gerät entfernt ist und Ermitteln einer biometrischen Charakteristik des Benützers über die Fernsteuereinheit.

### (weiter S. 2, Zeile 1 der Beschreibung vom Anmeldetag)

DVD-Player usw. gesteuert werden.

Eine Personalisierung einer Fernsteuerung in Verbindung mit einer Set-Top-Box hat eine Vielzahl von Vorteilen:
- Die Set-Top-Box kann im Sinne einer Kindersicherung programmiert werden, daß nur ausgewählte Fernsehkanäle gesehen und andere Fernsehkanäle gesperrt sind;
- die Set-Top-Box kann so programmiert werden, daß ebenfalls im Sinne einer Kindersicherung nur bestimmte Fernsehzeiten freigegeben sind, während das Gerät in anderen Zeiten gesperrt ist;
- die Set-Top-Box kann so programmiert werden, daß je nach Benutzer dessen Fernsehgewohnheiten, insbesondere Fernsehkanäle zu vorprogrammierten Gruppen zusammengefaßt sind, wie z.B. Sportkanäle, Unterhaltungskanäle, Bildungskanäle etc. Je nach Benutzer kann die Tastenbelegung einzelner Tasten der Fernsteuerung verändert werden, wodurch auch die Zahl möglicher Tasten reduziert werden kann;
- bei interaktiven Systemen, wie interaktiven Fernsehen, Homeshopping, Homebanking, Video-on-demand oder ähnlichem kann der Benutzer identifiziert werden, wobei auch hier in der Set-Top-Box zusätzliche Sicherungen eingebaut werden können, beispielsweise Grenzsummen für Bestellungen von Waren oder Filmen, Arten von Filmen (z.B. jugendfrei) etc.

Bei der in der WO 02/17627 A2 beschriebenen Fernsteuerung wird der Benutzer über den Fingerabdruckleser einmal identifiziert. Die Fernsteuerung bleibt dann solange auf diesen Benutzer personalisiert, bis er sich wieder durch Drücken einer bestimmten Taste oder erneutes Betätigen des Fingerabdrucklesers abmeldet. Wird dies vergessen, so kann ein anderer Benutzer mit der vollen Zugangsberechtigung des vorhergehenden Benutzers dessen Funktionen ausüben.

Als Abhilfe kann vorgesehen sein, daß die Personalisierung und damit die meisten Funktionen automatisch abgeschaltet werden, wenn für eine vorgegebene Zeitdauer keine Taste der Fernbedienung betätigt wurde oder wenn die Set-Top-Box oder ein Fernsehgerät abgeschaltet wurden. Auch kann vorgesehen sein, daß jeglicher Tastendruck oder bestimmte Funktionen nur dann ausgeführt werden, wenn gleichzeitig auch der Fingerabdruckleser eine autorisierte Person identifiziert hat. Als weitere Möglichkeit kann auch vorgesehen sein, daß alle oder zumindest mehrere Tasten der Fernsteuerung mit einem Fingerabdruckleser ausgestattet sind.

Die WO 02/084991 A2 beschreibt ebenfalls eine personalisierbare Fernsteuerung für ein interaktives Fernseh-System. Primär geht es dort um eine auf die jeweiligen Benutzer programmierte Tastenbelegung, um die Zahl der Tasten zu verringern. Zusätzliche Funktionen, wie z.B. "Garagentor öffnen", können implementiert werden. Für mehrere Benutzer kann eine Tabelle gespeichert werden, in welcher die Zuordnung einzelner Tasten zu vorgegebenen Funktionen benutzerspezifisch festgelegt werden kann. Durch Drücken einer bestimmten Taste wird ein Menü aufgerufen, in welchem alle Benutzer angezeigt und ein bestimmter Benutzer ausgewählt werden kann. Irgendwelche Sicherungsmaßnahmen um zu verhindern, daß sich jemand unter einem nicht zugewiesenen Benutzernamen anmeldet, sind dort nicht vorgesehen.

Die US 5,861,881 beschreibt ein interaktives Computersystem zum Multimedia-Betrieb, bei dem ein Benutzerprofil gespeichert werden kann. Dies kann sowohl in einem lokalen Computer oder einem Host-Computer eines Netzwerkes erfolgen. Dieses Computer-System kann auch beispielsweise über Kabel an Fernsehsender angeschlossen sein. Über dieses angelegte Benutzerprofil können bestimmte Inhalte von Daten oder Video selektiert werden.

Die US 5,715,020 beschreibt eine Fernsteuerung, die eine Vielzahl von Geräten steuern kann. Jede Fernsteuerung hat einen sie eindeutig identifizierenden Code. Eine zentrale Steuereinheit für mehrere Fernsteuerungen kann damit die individuelle Fernsteuerung identifizieren und ihr bestimmte fernzusteuernde Geräte zuweisen.

Problematisch bei den bekannten Multimedia-Geräten mit personalisierbarer Fernsteuerung ist jedoch die Komplexität der Bedienung. Manche Fernsteuerungen haben bis zu 40 oder mehr Tasten, mit denen bestimmte Funktionen ausgewählt werden. Je nach Benutzer können den einzelnen Tasten noch unterschiedliche Funktionen zugewiesen sein. Dies hat zur Folge, daß die meisten Benutzer nur eine begrenzte Anzahl von Funktionen überhaupt nutzen. Auch ist die Personalisierung äußerst komplex durchzuführen. Bei den meisten Geräten wird über eine eigene "Menü"-Taste ein Menü aufgerufen, das einige Hauptfunktionen und in diversen, teilweise tief gestaffelten Untermenüs, die einzelnen verfügbaren Funktionen anzeigt. In der Praxis sind die meisten Benutzer mit dieser Komplexität überfordert und meist nur die jugendlichen Familienmitglieder sind überhaupt in der Lage, ein solches Gerät zu bedienen, was dann wieder kontraproduktiv ist, weil gerade sicherheitsrelevante Funktionen, wie Kindersicherung, Homebanking oder kostenpflichtige aufrufbare Funktionen gerade gegenüber den Jugendlichen nicht gesperrt werden können.

Aufgabe der Erfindung ist es, die Fernsteuerung der eingangs genannten Art dahingehend zu verbessern, daß bei Gewährleistung eines hohen Maßes an Zugangssicherheit eine sehr einfache Bedienung einschließlich der Personalisierung möglich ist.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Multimedia-Anordnung nach der Erfindung hat eine personalisierbare Fernsteuerung, die eine Identifikationseinrichtung aufweist, ein von der Fernsteuerung steuerbares Multimedia-Gerät, das beispielsweise eine sogenannte Set-Top-Box ist und ein an dieses Multimedia-Gerät angeschlossenes Anzeigegerät, das beispielsweise ein Bildschirm, ein sogenannter "Beamer", ein Monitor oder ähnliches ist. Das Multimedia-Gerät enthält einen Mikroprozessor und einen daran angeschlossenen programmierbaren Speicher, der eine "Benutzer-Datenbank" enthält, in welcher eine Vielzahl von Daten gespeichert sind, die einzelne Benutzer identifizieren, diesen bestimmte "Rechte" zuweisen sowie eine individuelle Konfiguration des Multimedia-Gerätes einstellen, die dann auf dem Anzeigegerät abgebildet wird.

Die Multimedia-Anordnung ist so aufgebaut und konfiguriert, daß die Fernsteuerung, nur noch sechs Tasten benötigt, nämlich vier "Richtungstasten" für "auf", "ab", "links", und "rechts", eine Auswahltaste und eine "Zurück"-Taste. Alle Funktionen des Multimedia-Gerätes sind über drei Menüebenen auswählbar, die abstrakt wie folgt hierarchisch gegliedert sind:
1. Menüebene: Auswahl einer Objektgruppe,
2. Menüebene: Auswahl eines Objektes,
3. Menüebene: Auswahl einer Aktion mit dem ausgewählten Objekt.

Diese Gliederung in drei Menüebenen ist konsequent für alle Funktionen eingehalten. Zur weiteren Erleichterung der Bedienbarkeit sind Elemente der einzelnen Menüebenen jeweils in einer vertikalen Spalte untereinander und in einer horizontalen Zeile nebeneinander angeordnet, wobei sich die aus mehreren Elementen bestehende Spalte und die aus mehreren Elementen bestehende Zeile in einem "Focus"-Element schneiden, das in allen Menüebenen und bei allen Funktionen stets an einer unveränderbaren vordefinierten Stelle des Anzeigegerätes erscheint, vorzugsweise im Bereich der linken unteren Ecke des Anzeigegerätes. Durch die vier genannten Bewegungstasten werden die Elemente der Spalte aufwärts oder abwärts "geschoben", so daß beispielsweise in der ersten Menüebene die aktuelle Objektgruppe in dem "Focus"-Element sichtbar ist, wobei dann ebenfalls in der ersten Menüebene die Elemente der Objektgruppe in der horizontalen Zeile sichtbar ist und durch Betätigen der Bewegungstasten "links" oder "rechts" in das "Focus"-Element verschoben werden können. Durch Betätigen der Auswahltaste wird dann die im "Focus"-Element befindliche Objektgruppe ausgewählt und die zweite Menüebene aktiviert, die ebenfalls die analoge Anordnung der Elemente in Spalte und Zeile hat. Auch hier wird durch die vier Bewegungstasten ein auszuwählendes Objekt in das "Focus"-Element verschoben und durch die Auswahltaste ausgewählt, worauf die dritte und letzte Menüebene erscheint, die in analoger Weise wiederum in Spalten und Zeilen angeordnete Elemente hat, wobei das "Focus"-Element dann die durchzuführende Aktion mit dem ausgewählten Objekt bezeichnet, die durch Betätigung der Auswahltaste aktiviert wird.

Neben der einfachen Bedienung des Multimedia-Gerätes mittels einer Fernsteuerung wird die Übertragungssicherheit zunehmend wichtiger, da auch sensible personenbezogene Daten mit der Zugangsberechtigung verknüpft sind, wie z.B. Name, Adresse, Geburtsdatum, Bankverbindungen, Kreditkartennummer etc. Auf dem Markt sind programmierbare Fernsteuerungen erhältlich, die von einer Original-Fernsteuerung ausgesandte Daten einlesen und speichern können, so daß es möglich ist, eine Original-Fernsteuerung identisch zu kopieren und sich somit als unautorisierter Benutzer mit der kopierten Fernsteuerung bei dem Multimedia-Gerät anzumelden und alle Funktionen auszuführen und damit auch die in der Fernsteuerung vorhandene Identifikationseinrichtung, wie z.B. den Fingerabdruckleser, zu umgehen, da auch die von der Identifikationseinrichtung ermittelten Daten drahtlos zum Multimediagerät gesandt und damit von einer fremden Fernsteuerung eingelesen werden können. Zur Erhöhung der Zugangssicherheit wird daher eine auswechselbare hardwaremäßige Maßnahme vorgeschlagen, mit der sich die Fernsteuerung gegenüber dem Multimedia-Gerät identifiziert. Vorzugsweise ist diese hardwaremäßige Maßnahme eine SIM-Karte (Subscriber Identity Modul), wie sie bei Mobiltelefonen allgemein bekannt ist. Solche SIM-Karten haben sich millionenfach bewährt, sind kostengünstig zu erhalten und gelten nach wie vor als extrem sicheres und zuverlässiges Verschlüsselungsmittel. Darüber hinaus haben SIM-Karten auch den Vorteil, daß Daten auf ihr gespeichert werden können und damit Voreinstellungen auch auf andere Geräte übertragen werden können, beispielsweise wenn ein Gerät defekt ist.

Ein Folgeproblem aus den Anforderungen nach einfacher Bedienbarkeit und Zugangssicherheit ist dann der hardewaremäßige Aufwand der Fernsteuerung, die einen sehr leistungsfähigen, relativ viel Energie verbrauchenden und teuren Mikroprozessor benötigt. Zur Lösung dieses Folgeproblems schlägt die Erfindung vor, daß die Identifikationseinrichtung von der Fernsteuerung eingelesene Daten an das Multimedia-Gerät überträgt und eine Auswertung dieser Daten erst im Multimedia-Gerät erfolgt. Ist die Identifikationseinrichtung beispielsweise ein Fingerabdruckleser, der Bilddaten eines Fingerabdruckes einliest, so werden diese Bilddaten unausgewertet an das Multimedia-Gerät übermittelt und erst dort ausgewertet und mit in der Benutzerdatenbank gespeicherten Daten verglichen.

Zur Erhöhung der Sicherheit werden diese Bilddaten allerdings verschlüsselt, wobei vorzugsweise ein asymmetrisches Verschlüsselungsverfahren unter Einsatz der SIM-Karte durchgeführt wird. In besonders bevorzugter Weise sind auf der SIM-Karte folgende Daten gespeichert:
- ein erstes Paar von digitalen Schlüsseln;
- ein zweites Paar von digitalen Schlüsseln;
- ein persönlicher Identifizierungscode; und
- persönliche Daten mindestens eines Benutzers.

Im Speicher des Multimedia-Gerätes sind nach einer ersten Initialisierung folgende Daten gespeichert:
- nur ein Schlüssel des ersten Paares von digitalen Schlüsseln;
- nur ein Schlüssel des zweiten Paares von digitalen Schlüsseln;
- mit dem nur einen Schlüssel des zweiten Paares von digitalen Schlüsseln verschlüsselte biometrische Daten der Identifikationseinrichtung und persönliche Daten eines Benutzers sowie der persönliche Identifikationscode.

Bei einem Verbindungsaufbau zwischen der Fernsteuerung und dem Multimedia-Gerät liest die SIM-Karte biometrische Daten des Benutzers ein, fügt diesen den persönlichen Identifikationscode und den anderen Schlüssel des zweiten Paares von digitalen Schlüsseln hinzu und sendet ein so gebildetes Datenpaket mit dem anderen Schlüssel des ersten Paares von digitalen Schlüsseln verschlüsselt an das Multimedia-Gerät. Das Multimedia-Gerät entschlüsselt den empfangenen verschlüsselten Datensatz mit dem gespeicherten einen Schlüssel des ersten Paares von digitalen Schlüsseln, extrahiert daraus den anderen Schlüssel des zweiten Paares von digitalen Schlüsseln, den persönlichen Identifikationscode und die biometrischen Daten. Sodann liest es aus seinem Speicher die verschlüsselten biometrischen Daten, die verschlüsselten persönlichen Daten und den verschlüsselten persönlichen Identifikationscode aus und entschlüsselt sie mit dem anderen Schlüssel des zweiten Paares von digitalen Schlüsseln, vergleicht den empfangenen entschlüsselten persönlichen Identifikationscode und den entschlüsselten gespeicherten persönlichen Identifikationscode miteinander und schaltet nur bei Übereinstimmung das. Multimedia-Gerät frei.

Vorzugsweise werden die eingelesenen biometrischen Daten vor der Bildung des Datensatzes komprimiert, was vorzugsweise nach dem Huffman-Code erfolgt. Weiter wird vorzugsweise der von der Fernsteuerung an das Multimedia-Gerät zu übertragende Datensatz blockcodiert und vorzugsweise mit einer Vorwärtsfehlerkorrektur versehen.

Vorzugsweise hat auch das Multimedia-Gerät eine Leseeinrichtung für eine SIM-Karte, wobei nach der Erfindung ein Verbindungsaufbau zwischen der Fernsteuerung und dem Multimedia-Gerät nur dann möglich ist, wenn in beiden Geräten ein zusammengehöriges Paar von SIM-Karten vorhanden ist. Nach einer Alternative kann zunächst die Fernsteuerung alle relevanten Daten auf der in ihr befindlichen SIM-Karte speichern, worauf dann die SIM-Karte von der Fernsteuerung zum Multimedia-Gerät verbracht wird, um die relevanten Daten dort einzulesen.

Nach einer weiteren Variante wird die SIM-Karte nur für die Konfiguration verwendet und kann für den weiteren Betrieb der Fernsteuerung herausgenommen werden, wobei eine Konfiguration nur mit vorhandener SIM-Karte möglich ist.

Im Folgenden wird die Erfindung anhand eines Ausführungsbeispiels im Zusammenhang mit der Zeichnung ausführlicher erläutert. Es zeigt:
- Fig. 1: ein Prinzipschaltbild einer Multimedia-Anordnung nach der Erfindung;
- Fig. 2: ein Flußdiagramm zur Erläuterung der Initialisierung einer Verbindung zwischen der Fernsteuerung und dem Multimedia-Gerät; und
- Fig. 3: ein Flußdiagramm zur Erläuterung eines Identifikationsprozesses zwischen Fernsteuerung und Multimedia-Gerät.

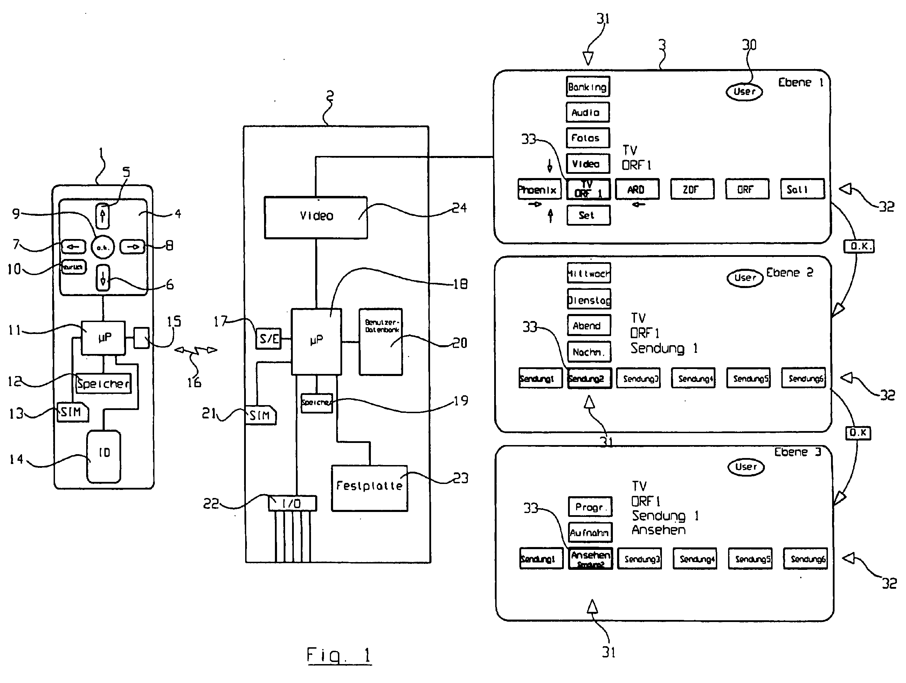

Fig. 1 zeigt eine Fernsteuerung 1, die ein Multimedia-Gerät 2 steuert, wobei an das Multimedia-Gerät 2 ein Anzeigegerät 3, wie z.B. ein Bildschirm, angeschlossen ist. Die Fernsteuerung 1 hat eine Tastatur 4, die nur sechs Steuertasten aufweist, nämlich vier Bewegungstasten 5, 6, 7 und 8 für die Richtungen "auf", "ab", "links" und "rechts" sowie eine Bestätigungstaste 9, die eine Auswahlfunktion auslöst und eine "Zurück"-Taste 10. Die Tastatur 4 ist in üblicher Weise mit einem Mikroprozessor 11 verbunden, an den mindestens ein Speicher 12, ein SIM-Karten-Lesegerät 13, eine Identifikationseinrichtung 14 und eine Sende/Empfangseinheit 15 angeschlossen sind.

Die Fernsteuerung 1 kann über die Sende/Empfangseinheit 15 mit dem Multimedia-Gerät 2 eine drahtlose Kommunikationsverbindung aufbauen, die durch einen Pfeil 16 angedeutet ist. Üblicherweise erfolgt dies über Infrarot-Signale. Das Multimedia-Gerät 2 hat eine entsprechende Sende/Empfangseinheit 17, die mit einem Mikroprozessor 18 verbunden ist. Der Mikroprozessor 18 ist hier wesentlich leistungsfähiger als der Mikroprozessor 11 der Fernsteuerung 1. An den Mikroprozessor 18 ist weiterhin mindestens ein Speicher 19 angeschlossen, wobei dieser Speicher 19 entweder selbst einen als "Benutzerdatenbank" 20 bezeichnenden Bereich hat, oder es ist ein zusätzlicher Speicher 20 angeschlossen, der die Benutzerdatenbank enthält. Weiter ist an dem Mikroprozessor 18 ein SIM-Karten-Lesegerät 21 angeschlossen, sowie eine oder mehrere Eingabe/Ausgabeschnittstellen 22 sowie optional weitere Peripheriegeräte 23, wie z.B. eine Festplatte, sowie eine Videokarte 24 zur Aufbereitung von Videosignalen für das Anzeigegerät 3, das beispielsweise eine Fernseh-Bildröhre, ein Bildschirm, ein Beamer oder sonstiges Gerät zur Darstellung von bewegten Bildern ist.

An die Schnittstelle 22 des Multimedia-Gerätes 2, das beispielsweise eine sogenannte Set-Top-Box ist, können diverse Geräte angeschlossen werden, beispielsweise eine Telefonleitung, eine DSL-Verbindung, eine Funkverbindung, ein Fernsehempfänger, eine Fernsehantenne sowie weitere Peripheriegeräte, wie z.B. ein Videorecorder, ein DVD-Abspielgerät, ein CD-Abspielgerät, ein Personalcomputer, eine Videokamera oder sonstige in einem Haushalt befindliche Geräte, die über das Multimedia-Gerät 2 gesteuert werden können.

Für die gewünschte Personalisierung zwischen Fernsteuerung 1 und Multimedia-Gerät 2 sind in der Fernsteuerung 1 das SIM-Karten-Lesegerät 13 und die Identifikationseinrichtung 14 vorgesehen. Über das SIM-Karten-Lesegerät 13 wird die Fernsteuerung 1 eindeutig identifiziert und von anderen nicht autorisierten Fernsteuerungen unterschieden. Über die Identifikationseinrichtung 14 wird eine bestimmte Person identifiziert. Eine bevorzugte Identifikationseinrichtung 14 ist ein in die Fernsteuerung 1 integriertes FingerabdruckLesegerät, das Bilddaten eines Fingerabdruckes eines Benutzers einliest, die, wie weiter unten erläutert wird, mit gespeicherten Daten der Benutzerdatenbank 20 verglichen werden, um einen autorisierten Benutzer zu identifizieren.

Hat sich die Fernsteuerung 1 über das SIM-Karten-Lesegerät 13 und der Benutzer über die Identifikationseinrichtung 14 gegenüber dem Multimedia-Gerät 2 identifiziert, so ruft der Mikroprozessor 18 aus der Benutzerdatenbank 20 ein dort gespeichertes Benutzerprofil des jeweiligen Benutzers ab, über welches das Multimedia-Gerät 2 für den angemeldeten Benutzer personalisiert wird, indem beispielsweise Zugangsberechtigung, Sendezeiten, ausgewählte Fernsehsender etc. festgelegt werden, die dann auf dem Anzeigegerät 3 erscheinen. In Zusammenwirken zwischen dem Mikroprozessor 18, der Benutzerdatenbank 20 und einem Programmspeicher 19 werden dann alle möglichen Funktionen über nur drei Menüebenen zugänglich gemacht, wobei die drei Menüebenen hierarchisch wie folgt aufgebaut sind:
1. Auswahl einer Objektgruppe,
2. Auswahl eines Objektes,
3. Auswahl einer Tätigkeit mit dem ausgewählten Objekt,
   wobei alle Funktionen über die nur sechs Steuertasten der Tastatur 4 ansteuerbar sind.

Im Folgenden wird dies im einzelnen anhand von Fig. 1 am Beispiel einer Fernsehsendung näher erläutert. Hat sich der Benutzer identifiziert, so kann dieser auf dem Anzeigegerät 3 in der Menüebene 1 in einem separaten Feld 30 angezeigt werden. Auf dem Anzeigegerät 3 erscheint eine kreuzförmige Abbildung von Feldern und zwar vertikal in einer Spalte angeordnete Felder 31 und in einer Zeile 32 horizontal angeordnete Felder, wobei im Schnittpunkt zwischen den Feldern 31 der Spalte und den Feldern 32 der Zeile ein sogenanntes Focus-Feld 33 abgebildet wird, das über die Bestätigungstaste 9 der Fernsteuerung 1 auswählbar ist. In den Feldern 31 der Spalte sind die Grundfunktionen auswählbar, wie z.B. Grundeinstellung (Set), Fernsehen (TV), Videos ansehen, Fotos ansehen, Audiodateien abspielen etc., wobei bereits die Auswahl und die Anordnung der Felder für den im Feld 30 angezeigten Benutzer personalisiert ist. Alle Elemente der Spalte 31 können durch die beiden Tasten 5 und 6 aufwärts oder abwärts verschoben werden, so daß immer nur ein Element in dem Focus-Feld 33 sichtbar ist.

Im dargestellten Ausführungsbeispiel ist die Funktion "Fernsehen" (TV) ausgewählt. Darauf erscheinen dann in den Feldern 32 der Zeile die für den angemeldeten Benutzer verfügbaren Fernsehsender. Durch Betätigen der Tasten 7 und 8 für "links" bzw. "rechts" wird dann der gewünschte Sender in das Focus-Feld 33 verschoben und durch Betätigen der Auswahltaste 9 ausgewählt.

Es erscheint dann die zweite Menüebene, in der die für den ausgewählten Fernsehsender möglichen Sendungen angezeigt werden, was über das von den meisten Sendern heute ausgestrahlte EPG-Signal (Electronic program guide) visualisiert wird, wobei hier in den Feldern 31 der Spalte eine zeitliche Gruppierung nach Wochentagen und/oder Tageszeiten wie, Vormittag, Nachmittag oder Abend, vorgenommen wird und in den Feldern 32 der Zeile die individuelle Sendung gegebenenfalls einschließlich Sendezeit angezeigt wird. Die im Focus-Feld 33 befindliche Sendung kann dann durch die Bestätigungstaste 9 ausgewählt werden, worauf die dritte Menüebene erscheint.

In der dritten Menüebene sind die möglichen Aktionen aufgezeigt, wie z.B. jetzt ansehen, aufnehmen oder programmieren. Je nach Anzahl der verfügbaren Funktionen erscheinen unterschiedlich viele Felder.

Durch Drücken der "Zurück"-Taste 10 wird jeweils eine Menüebene zurückgesetzt.

In entsprechender Weise erfolgt auch für alle anderen Funktionen die entsprechende Auswahl. Bei der Funktion "Fotos der Menüebene 1" wird beispielsweise ein bestimmtes "Album" ausgewählt, wie z.B. Urlaub, Weihnachten etc. In der zweiten Ebene können dann einzelne Fotos ausgewählt werden und in der Menüebene 3 dann die entsprechende Aktion, wie z.B. ansehen, drucken, löschen, als E-mail versenden oder ähnliches.

Je nach autorisiertem Benutzer werden bestimmte Funktionen gar nicht angezeigt. So kann beispielsweise die Funktion "Homebanking" für bestimmte Benutzer gesperrt sein und wird für diese gar nicht angezeigt.

In der zweiten Menüebene können beispielsweise bestimmte Sendezeiten oder bestimmte Arten von Sendungen gesperrt und damit automatisch ausgeblendet werden und in der dritten Menüebene können wiederum andere Funktionen freigegeben oder gesperrt sein, wie beispielsweise Löschen aufgenommener Sendungen, Löschen von Fotos oder ähnliches.

Über die Personalisierung ist auch die Auswahl und Anordnung der einzelnen Elemente auf den Benutzer abgestimmt. So wird beispielsweise in der ersten Menüebene bei Menüpunkt "Fernsehen" für einen bestimmten Benutzer die Auswahl und Anordnung der möglichen Sender individuell gestaltet, wobei der vom jeweiligen Benutzer am häufigsten gesehene Sender im Focus-Feld 33 angezeigt wird, wobei dies auch vom Wochentag und/oder der Tageszeit abhängig ist. Dies kann auch "dynamisch" angepaßt werden, ohne daß der Benutzer entsprechende Daten aktiv in die Benutzerdatenbank 20 eingeben muß. Sieht beispielsweise ein autorisierter Benutzer an einem bestimmten Wochentag häufiger eine bestimmte Sendung, so wird diese "Gewohnheit" in der Benutzerdatenbank 20 gespeichert und bei entsprechendem Tag und Uhrzeit der entsprechende Sender, die entsprechende Sendung und die Aktion automatisch im Focus-Feld 33 plaziert.

Durch die Kombination von nur sechs Steuertasten der Tastatur mit den drei Menüebenen, die konsequent für alle Möglichkeiten des Gerätes eingehalten sind, ist die Bedienung der Multimediaanordnung wesentlich vereinfacht und auch der hardewaremäßige Aufwand der Fernsteuerung durch die geringe Tastenzahl reduziert. Der Benutzer muß sich nicht mehr eine Vielzahl von Tastenfunktionen und unterschiedlichen Tastenbelegungen merken. Durch die Personalisierung kann er für ihn nicht gewünschte oder nicht freigegebene Funktionen von vornherein ausblenden und findet sich leicht in den drei Menüebenen zurecht. Auch hat sich herausgestellt, daß die Anordnung der Felder in Zeilen 32 und Spalten 31 mit einem Focus-Feld 33, durch das die einzelnen Felder hindurch geschoben werden, die Arbeit wesentlich erleichtert, da das "Wesentliche" immer an derselben örtlichen Stelle erscheint, so daß der Benutzer nicht mehr auf dem Anzeigegerät suchen muß, wo die gewünschte Funktion angezeigt wird, um anschließend mit Bewegungstasten dorthin zu manövrieren.

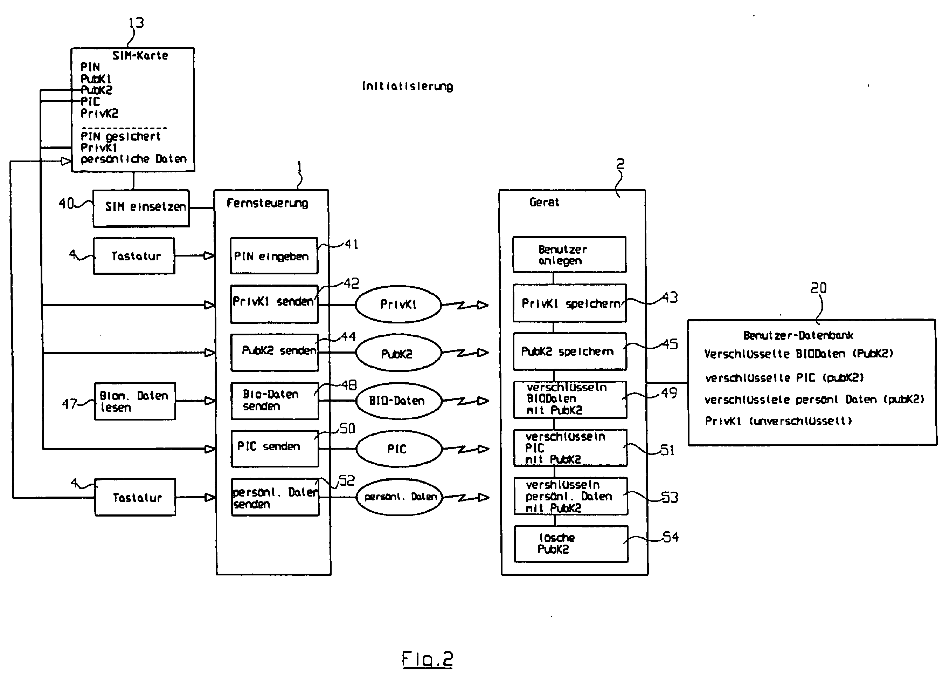

Unter Bezugnahme auf Fig. 2 wird jetzt die Initialisierungsphase beschrieben. Zunächst muß in einem Schritt 40 die SIM-Karte in den SIM-Kartenleser 13 der Fig. 1 eingesetzt werden. Die SIM-Karte enthält folgende gespeicherte Daten:
1. Eine persönliche Identifikationsnummer (sog. PIN),
2. persönliche Daten eines Benutzer, wie z.B. Name, Geburtsdatum, Geschlecht, Kreditkartennummer etc.,
3. einen ersten privaten Schlüssel (PrivK 1),
   wobei die unter 2. und 3. genannten Daten nur nach Eingabe der unter 1. genannten PIN zugänglich sind.

Weiter enthält die SIM-Karte folgende frei zugängliche Daten:
4. einen zweiten privaten Schlüssel (PrivK 2),
5. einen persönlichen Identifikationscode (PIC),
6. einen ersten öffentlichen Schlüssel (PubK 1) und
7. einen zweiten öffentlichen Schlüssel (PubK 2).

Wie weiter unten noch ausführlicher erläutert wird, bilden die Schlüssel PubK 1 und PrivK 1 ein erstes und die Schlüssel PubK 2 und PrivK 2 ein zweites Paar von Schlüsseln, die zur Verschlüsselung und Entschlüsselung verwendet werden. Dabei wird eine sog. asymmetrische Kryptographie angewandt, bei der zum Verschlüsseln von Daten ein Schlüssel eines der genannten Paare, meist der sog. öffentliche Schlüssel, verwendet wird und zum Entschlüsseln der andere Schlüssel des Paares, meist der sog. private Schlüssel. Zum Verschlüsseln und zum Entschlüsseln werden somit unterschiedliche Schlüssel verwendet. Eine Entschlüsselung von Daten mit dem Schlüssel, der zur Verschlüsselung verwendet wurde, ist nicht möglich. Die Algorithmen zur Verschlüsselung und Entschlüsselung sind im Prinzip bekannt. Es sei beispielsweise auf die asymmetrischen Verschlüsselungsalgorithmen RSA, das Rabin-Kryptosystem oder das Elgamal-Kryptosystem verwiesen. Nach dem Einsetzen der SIM-Karte wird zunächst die PIN abgefragt (Schritt 41), die über die Tastatur 4 (Fig. 1) mit den Richtungstasten in Kombination mit Feldern 31 und/oder 32 des Anzeigegerätes 2 eingegeben wird und üblicherweise eine vierstellige Zahl ist. Damit ist die SIM-Karte freigeschaltet und die über die PIN gesperrten, oben genannten persönlichen Daten und der private erste Schlüssel PrivK 1 sind zugänglich.

Die Fernsteuerung 1 sendet dann über die Sende-/Empfangseinrichtung 15 den ersten privaten Schlüssel PrivK 1 (Schritt 42) und den zweiten öffentlichen Schlüssel PubK 2 (Schritt 44) an das Multimedia-Gerät 2, wo sie von der Sende-/Empfangseinheit 17 empfangen und über den Mikroprozessor 18 im Speicher 19 abgespeichert werden (Schritte 42-45). Sodann werden die biometrischen Daten des Benutzers über die Fingerabdruckleseeinrichtung 14 (Fig. 1) eingelesen (Schritt 47) und an das Multimedia-Gerät 2 übertragen (Schritt 48), wo sie mit dem zuvor empfangenen und gespeicherten öffentlichen Schlüssel PubK 2 verschlüsselt werden (Schritt 49). In ähnlicher Weise wird der persönliche Identifikationscode PIC von der SIM-Karte 13 abgefragt und zum Multimedia-Gerät 2 übertragen (Schritt 50), wo er ebenfalls mit dem öffentlichen Schlüssel PubK 2 verschlüsselt wird (Schritt 51). Darauf werden die persönlichen Daten des Benutzers entweder von der SIM-Karte 13 abgefragt oder über die Tastatur 4 eingegeben und an das Multimedia-Gerät 2 übertragen (Schritt 52), wo sie ebenfalls mit dem zweiten öffentlichen Schlüssel PubK 2 im Schritt 53 verschlüsselt werden.

Der zweite öffentliche Schlüssel PubK 2, der im Schritt 45 im Multimedia-Gerät 2 gespeichert wurde, wird nach diesen Vorgängen im Schritt 54 gelöscht. Aus den gespeicherten und teilweise verschlüsselten Daten wird dann in der Benutzerdatenbank 20 ein Benutzerprofil angelegt und gespeichert, das zunächst folgende Daten enthält:
- den unverschlüsselten ersten privaten Schlüssel PrivK1,
- die mit dem Schlüssel PubK2 verschlüsselten biometrischen Daten des Benutzers,
- den verschlüsselten persönlichen Identifikationscode (PIC) und die verschlüsselten persönlichen Daten, jeweils mit PubK2 verschlüsselt.

Zusätzlich kann der Benutzer zu den persönlichen Daten noch weitere Daten hinzufügen, wie z.B. Kanalliste bevorzugter Fernsehkanäle, Tastenbelegungen der Tasten der Fernsteuerung, gesperrte Fernsehkanäle, Fernsehzeiten, usw.

Der beschriebene Initialisierungsvorgang ist insoweit als kritisch einzustufen, als der erste private Schlüssel PrivK1 drahtlos übertragen wird und damit "abgehört" werden kann, wenn ein geeignetes Empfangsgerät in Rechweite ist. Bei einer Infrarot-Übertragung ist die Gefahr, daß ein geeignetes Empfangsgerät in Rechweite ist, allerdings sehr gering, da die Reichweite stark begrenzt ist und eine ungestörte Sichtverbindung erforderlich ist.

Anschließend ist jedoch hohe Sicherheit gegeben, da die übrigen Daten mit dem öffentlichen Schlüssel PubK2 verschlüsselt sind, der nach der Initialisierung im Multimedia-Gerät 2 gelöscht wird und diese Daten nicht mit dem privaten ersten Schlüssel PrivK1 entschlüsselt werden können.

Zur weiteren Erhöhung der Sicherheit kann auch der Schlüssel PrivK 1 auf der SIM-Karte 13 gelöscht werden, so daß er als "privater" Schlüssel bezeichnet werden kann, der nur noch dem Gerät zur Verfügung steht.

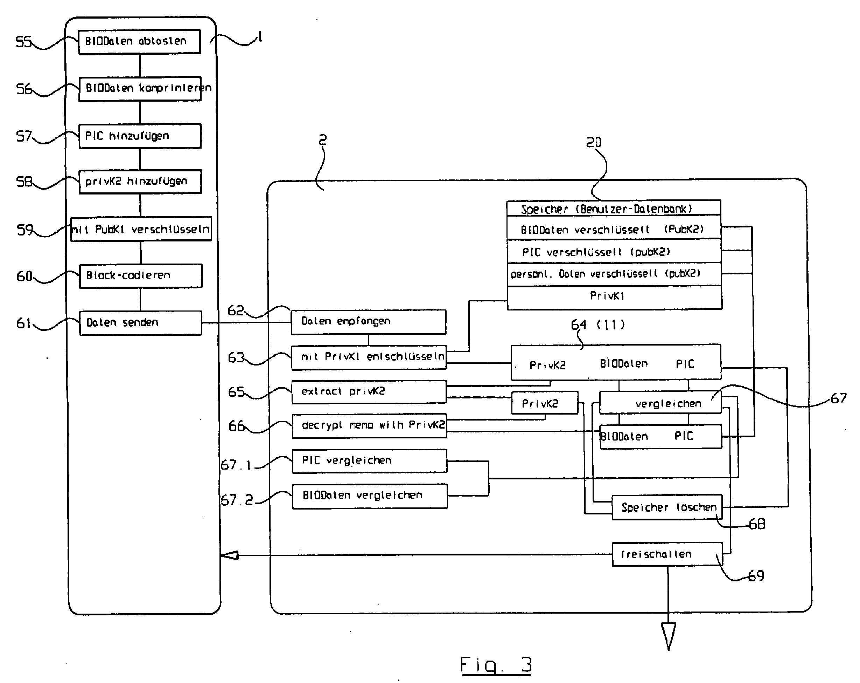

Im Zusammenhang mit Fig. 3 wird jetzt der normale Identifikationsprozeß beschrieben, mit welchem eine Verbindung zwischen der Fernsteuerung 1 und dem initialisierten Multimedia-Gerät 2 aufgebaut wird. Es wird davon ausgegangen, daß die Fernsteuerung 1 sendebereit und das Multimedia-Gerät 2 empfangsbereit sind.

In einem Schritt 55 werden die biometrischen Daten des Benutzers gelesen, beispielsweise indem der Benutzer einen Finger auf das Fingerabdrucklesegerät 14 legt, das entsprechende Bilddaten einliest. Diese Bilddaten können in einem Schritt 56 komprimiert werden, was nach bekannten Datenkompressionsverfahren, wie z.B. dem Huffman-Code, erfolgt.

Diesen komprimierten Bilddaten wird in einem Schritt 57 der persönliche Identifikationscode PIC hinzugefügt, der entweder von der SIM-Karte oder dem Speicher 12 (Fig. 1) ausgelesen wird. Weiter wird im Schritt 58 der zweite private Schlüssel PrivK2 hinzugefügt, der ebenfalls von der SIM-Karte oder dem Speicher 12 ausgelesen wird. Dieses gesamte Datenpaket besteht aus den komprimierten biometrischen Daten, der PIC und dem Schlüssel PrivK 2. Dieses Datenpaket wird mit dem ersten öffentlichen Schlüssel PubK1 in einem Schritt 59 verschlüsselt. Zusätzlich kann optional eine Blockcodierung und eine sog. Vorwärtsfehlerkorrektur (kurz FEC von Englisch "Forward error correction") vorgenommen werden (Schritt 60).

Sodann werden die so erzeugten Daten an das Multimedia-Gerät 2 über die Funkstrecke 16 übertragen (Schritt 61) und vom Multimedia-Gerät 2 empfangen (Schritt 62). Dort werden diese Daten zunächst mit dem in der Benutzerdatenbank 20 gespeicherten privaten Schlüssel PrivK1 entschlüsselt (Schritt 63), woraus man einen Datensatz mit PrivK2, PIC und den biometrischen Daten erhält (Block 64), aus welchem in Schritt 65 der zweite private Schlüssel PrivK2 extrahiert wird. Die biometrischen Daten und der PIC werden im Arbeitsspeicher 19 zwischengespeichert. Mit dem nunmehr entschlüsselten und extrahierten zweiten privaten Schlüssel PrivK2 werden im Schritt 66 die in der Benutzerdatenbank 20 abgespeicherten und mit dem öffentlichen Schlüssel PubK2 vor dem Abspeichern verschlüsselten Daten, nämlich der PIC, die biometrischen Daten und die persönlichen Daten entschlüsselt und im darauffolgenden Schritt 67 werden die nunmehr entschlüsselten Daten aus der Benutzerdatenbank 20 und die empfangenen Daten miteinander verglichen. Zweckmäßigerweise wird zunächst der PIC verglichen. Sofern dieser nicht übereinstimmt, stammen die empfangenen Daten nicht von einer autorisierten Fernsteuerung, so daß weitere Arbeitsschritte abgebrochen werden können. Gegebenenfalls kann eine Aufforderung zum wiederholten Aussenden erzeugt werden, die beispielsweise auf einem Bildschirm des Fernsehgerätes angezeigt wird oder als Rücksignal über die Funkstrecke 16 an die Fernsteuerung 1 übermittelt und dort angezeigt wird.

Ergibt ein Vergleich des PIC eine autorisierte Fernsteuerung, so werden die biometrischen Daten verglichen (Schritt 67.1) und bei Übereinstimmung gibt der Mikroprozessor 18 ein Freigabesignal an seinem Ausgang an die Schnittstelle 22 aus (Schritt 69). Es kann dann eine gesicherte, autorisierte Bedienung des Multimedia-Gerätes 2 und der daran angeschlossenen weiteren Geräte durch die Fernsteuerung 1 durchgeführt werden. Auch wird über die Funkstrecke 16 der Fernsteuerung ein Quittungssignal für eine erfolgreiche Anmeldung übermittelt, das in der Fernsteuerung sensible Daten im Speicher 12 löscht, insbesondere die erfaßten biometrischen Daten. In ähnlicher Weise werden auch im Speicher 19 des Gerätes 2 die miteinander zu vergleichenden Daten gelöscht, so daß die Speicher 12 und 19 der Fernsteuerung 2 und des Gerätes 1 nach der erfolgreichen Anmeldung wieder in ihrem Ausgangszustand sind. Es kann dann der normale Betrieb zwischen Fernsteuerung 1 und Multimedia-Gerät 2 aufgenommen werden, der auch bidirektional sein kann.

Aus Sicherheitsgründen kann auch vorgesehen sein, daß die autorisierte Verbindung nach einer vorgegebenen Zeit unterbrochen wird und eine neue Anmeldung gemäß den in Zusammenhang mit Fig. 3 beschriebenen Schritten vorzunehmen ist. Auch kann vorgesehen sein, daß für bestimmte, sicherheitsrelevante Steuerungsvorgänge eine erneute Identifizierung vorzunehmen ist, beispielsweise bei Übermittlung von Name, Anschrift oder Kreditkartennummer über angeschlossene Kommunikationsgeräte.

Bei der Initialisierung gemäß den oben im Zusammenhang mit Fig. 2 beschriebenen Arbeitsschritten können bei den persönlichen Daten des jeweiligen Benutzers auch Nutzerrechte vergeben werden, beispielsweise bezüglich Anlegen oder Ändern von Benutzerprofilen, so daß beispielsweise nur bestimmte Personen, die über ihre biometrischen Daten identifiziert werden, berechtigt sind, neue Benutzer in der Benutzerdatenbank anzulegen oder bestimmten einzelnen Benutzern zugewiesene Rechte zu ändern. Andere Daten, die ebenfalls bei den persönlichen Daten abgespeichert sind, können dagegen so vereinbart werden, daß sie der einzelne Benutzer nach seiner Identifizierung frei ändern kann, wie z.B. Tastenbelegung der Fernsteuerung, Favoritenliste einzelner Fernsehsender, soweit diese freigegeben sind.

Zusammengefaßt wird mit der Erfindung ein sehr hohes Maß an Sicherheit erreicht. Selbst wenn das Gerät ohne SIM-Karte in Hände unautorisierter Personen gelangt, ist es nicht möglich, an die geschützten biometrischen Daten und die geschützten persönlichen Daten heranzukommen. Lediglich wenn eine unautorisierte Person das Gerät und die SIM-Karte zur Verfügung hat, so ist es theoretisch möglich, mit dem auf der SIM-Karte gespeicherten ersten Schlüssel PubK1 die in der Benutzerdatenbank 20 abgespeicherten geschützten Daten zu entschlüsseln. Hierzu muß der Benutzer dann aber unmittelbaren Zugang zur Benutzerdatenbank 20 haben, was hohen technischen Aufwand erfordert. Hier kann herstellerseits vorgesehen sein, daß der entsprechende Speicher derart geschützt ist, daß entweder kein Zugang von außen möglich ist oder sein Inhalt automatisch gelöscht wird, wenn versucht wird, den Speicher auszubauen. Auf alle Fälle ist es empfehlenswert, den die Benutzerdatenbank enthaltenden Speicher zu löschen, bevor das Gerät Dritten übergeben wird.

## Patentansprüche

1. Multimedia-Anordnung
mit einer Fernsteuerung (1), die
- eine Tastatur (4),
- einen ersten Mikroprozessor (11),
- mindestens einen ersten Speicher (12),
- eine Identifikationseinrichtung (14), die biometrische Daten einer Person erfasst, und
- eine Sende/Empfangseinheit (15) zur bidirektionalen Datenübertragung aufweist,
mit einer Set-Top-Box (2), die
- einen zweiten Mikroprozessor (18),
- eine zweite Sende/Empfangseinheit (17),
- mindestens einen zweiten Speicher (19, 20) zur Speicherung eines Benutzerprofils, und
- mindestens eine Schnittstelle (22, 24) aufweist
und mit einem Anzeigegerät (3), das mit der Set-Top-Box (2) verbunden ist,
**dadurch gekennzeichnet,**
- **dass** die Tastatur (4) der Fernsteuerung (1) nur sechs Steuertasten (5, 6, 7, 8, 9, 10) hat, denen die Funktionen auf (5), ab (6), links (7), rechts (8), Auswahl (9) und Zurück (10) zugewiesen sind,
- **dass** alle Funktionen der Set-Top-Box (2) über drei Menüebenen ansteuerbar sind, wobei
- in der ersten Menüebene eine Objektgruppe,
- in der zweiten Menüebene ein Objekt, und
in der dritten Menüebene eine mit dem Objekt auszuführende Aktion ansteuerbar sind, wobei diese Gliederung konsequent für alle Funktionen eingehalten ist,
- **dass** Elemente der Objektgruppen, der Objekte und der Aktionen in Feldern auf dem Anzeigegerät (3) in einer vertikalen Spalte (31) und einer horizontalen Zeile (32) abgebildet sind, wobei sich die Spalte (31) und die Zeile (32) in einem Focus-Feld (33) kreuzen,
- **dass** der zweite Mikroprozessor (18) auf einen Empfang von Steuersignalen der Fernsteuerung (1) in Abhängigkeit von einer Betätigung der Steuertasten (5, 6, 7, 8) solche Signale an das Anzeigegerät (3) liefert, dass Elemente der Felder der Spalte (31) und der Zeile (32) in das Focus-Feld (33) platziert werden, wobei das Fokus-Feld (33) ortsfest ist,
- **dass** das im Focus-Feld (33) befindliche Element durch die Auswahltaste (9) aktivierbar ist
- **dass** die in den Feldern der Spalte (31) und der Zeile (32) angezeigten Elemente in Abhängigkeit von Signalen der Identifikationseinrichtung (14) in Zusammenwirken mit in einer Benutzerdatenbank (20) der Set-Top-Box (2) gespeicherten Daten konfiguriert sind,
- **dass** die Fernsteuerung (1) ein SIM-Karten-Lesegerät (13) aufweist, in welches eine SIM-Karte einsetzbar ist und daß die Fernsteuerung (1) und die Set-Top-Box (2) nur dann eine bidirektionale Kommunikations verbindung (16) zwischen der ersten und der zweiten Sende/Empfangs einheit (15, 17) freischalten, wenn eine vorbestimmte SIM-Karte in das SIM-Karten-Lesegerät (13) der Fernsteuerung (1) eingesetzt ist, und
- **dass** die Set-Top-Box eingerichtet ist, die Menü-Ebenen für die Person zu personalisieren, wobei die Person über ihre biometrischen Daten identifiziert wird und wobei die Personalisierung eine Ausblendung bestimmter nicht gewünschter und/oder nicht freigegebener Funktionen umfasst,
- **dass** der Mikroprozessor (18) der Set-Top-Box (2) so konfiguriert ist, dass Signale der Steuertasten (5-10) nur dann verarbeitet werden, wenn die Identifikationseinrichtung (14) der Fernsteuerung (1) vorbestimmte Signale an die Set-Top-Box (2) übertragen hat, die mit Signalen der Benutzerdatenbank (20) übereinstimmen,
- **dass** die Set-Top-Box (2) ein SIM-Karten-Lesegerät (21) aufweist und
- **dass** der Mikroprozessor (18) der Set-Top-Box (2) so konfiguriert ist, dass eine Freischaltung der Kommunikationsverbindung (16) nur dann erfolgt, wenn eine SIM-Karte in das SIM-Karten-Lesegerät (21) der Set-Top-Box (2) eingesetzt ist.

2. Multimedia-Anordnung nach Anspruch 1, **dadurch gekennzeichnet,**
**dass** auf der SIM-Karte des SIM-Karten-Lesegerätes (13) der Fernsteuerung (1) folgende Daten gespeichert sind:
- ein erstes Paar von digitalen Schlüsseln (PubK 1, PrivK 1),
- ein zweites Paar von digitalen Schlüsseln (PubK 2, PrivK 2),
- ein persönlicher Identifizierungscode (PIC), und
- persönliche Daten mindestens eines Benutzers,
**dass** der Speicher (19) der Set-Top-Box (2) nach einer ersten Initialisierung folgende Daten gespeichert hält:
- nur einen Schlüssel (PrivK 1) des ersten Paares von digitalen Schlüsseln,
- nur einen Schlüssel (PubK 2) des zweiten Paares von digitalen Schlüsseln,
- mit dem nur einen Schlüssel (PubK 2) des zweiten Paares von digitalen Schlüsseln verschlüsselte biometrische Daten und persönliche Daten eines Benutzers, sowie den persönlichen Identifikationscode (PIC),
- **dass** bei einem Verbindungsaufbau zwischen der Fernsteuerung (1) und dem Set-Top-Box (2) die Identifikationseinrichtung (14) biometrische Daten des Benutzers einliest, diesen den persönlchen Identifikationscode (PIC) und den anderen Schlüssel (PrivK 2) des zweiten Paares von digitalen Schlüsseln hinzufügt,
aus dem Speicher (19, 20) die verschlüsselten biometrischen Daten, die verschlüsselten persönlichen Daten und den verschlüsselten persönlichen Identifikationscode (PIC) ausliest und mit dem anderen Schlüssel (PrivK 2) des zweiten Paares von digitalen Schlüsseln entschlüsselt, den empfangenen entschlüsselten persönlichen Identifikationscode und den entschlüsselten gespeicherten persönlichen Identifikationscode miteinander vergleicht und bei
Übereinstimmung die empfangenen entschlüsselten biometrischen Daten und die gespeicherten entschlüsselten biometrischen Daten miteinander vergleicht und nur bei Übereinstimmung die Set-Top-Box (2) freischaltet.

3. Multimedia-Anordnung nach Anspruch 2, **dadurch gekennzeichnet, dass** die von der Identifikationseinrichtung (14) der Fernsteuerung (1) ermittelten biometrischen Daten vor der Übertragung an die Set-Top-Box (2) komprimiert werden.

4. Multimedia-Anordnung nach Anspruch 3, **dadurch gekennzeichnet, dass** das Komprimieren nach dem Huffman-Code erfolgt.

5. Multimedia-Anordnung nach einem der Ansprüche 2 bis 4, **dadurch gekennzeichnet, dass** der von der Fernsteuerung (1) an die Set-Top-Box (2) zu übertragende Datensatz blockcodiert ist.

6. Multimedia-Anordnung nach einem oder mehreren der Ansprüche 2 bis 4, **dadurch gekennzeichnet, dass** der von der Fernsteuerung (1) an die Set-Top-Box (2) zu übertragende Datensatz mit einer Vonrvärtsfehlerkorrektur versehen ist.

## Claims

1. Multimedia arrangement
with a remote control (1), comprising
- a keyboard (4),
- a first microprocessor (11),
- at least a first memory (12),
- an identification device (14) which detects biometric data of a person, and
- a transmitter / receiver unit (15) for bidirectional data transmission, with a set-top box (2) comprising
- a second microprocessor (18),
- a second transmitting / receiving unit (17),
- at least a second memory (19, 20) for storing a user profile, and
- at least one interface (22, 24)
and a display device (3) beeing connected with the set-top box (2), **characterized in that**
the keyboard (4) of the remote control (1) has only six control keys (5, 6, 7, 8, 9, 10), to which functions "UP" (5), "DOWN" (6), "LEFT" (7), "RIGHT" (8), "SELECT" (9) and "BACK" (10 are assigned)
- that all functions of the set-top box (2) can be controlled by three menu levels,wherein
- in the first menu level an object group,
- in the second- menu level an object, and
- in the third menu level an action can be controlled to be performed with the object, wherein this structure is consistently adhered to all functions,
- that the elements of the object groups, of the objects and of the actions are shown in fields on the display device (3) in a vertical column (31) and a horizontal line (32), wherein the column (31) and the line (32) intersect each other in a Focus-field (33),
- that the second microprocessor (18) upon receipt of control signals from the remote control (1) in response to actuation of the control keys (5, 6, 7, 8) provides such signals to the display device (3) that elements of the fields in the column (31) and the line (32) are placed in the Focus-field (33),
wherein the Focus-field (33) is stationary,
- that the element situated in Focus-field (33) can be activated by the selection key (9)
- that the elements displayed in the fields of the column (31) and of the line (32) are configured in response to signals from the identification device (14) in co-operation with data stored in a user database (20) of the set-top box (2).
- that the remote control (1) comprises a SIM-card reader (13) into which a SIM card can be inserted and **in that** the remote control (1) and the set-top box (2) unlock a bidirectional communication link (16) between the first and the second transmitter / receiver unit (15, 17) only when a predetermined SIM card is inserted in the SIM-card reader (13) of the remote control (1),
and
- that the set-top box is adapted to personalize the menu levels for the person, wherein the person is identified by their biometric data and the personalization includes a suppression of certain unwanted and / or non-approved functions,
- that the microprocessor (18) of the set-top box (2) is configured so that signals of the control buttons (5-10) will only be processed when the identification device (14) of the remote control (1) has delegated predetermined signals to the set top box (2) that match signals the user database (20),
- that the set-top box (2) comprises a SIM-card reader (21) and the microprocessor (18) is the set-top box (2) is configured such that an activation of the communication link (16) only takes place when a SIM card is inserted into the SIM card reader (21) of the set-top box (2) .

2. Multimedia arrangement according to claim 1, **characterized in that** the following data are stored on the SIM card of the SIM-card reader of the remote control:
a first pair of digital keys (1 PubK, PrivK 1)
a second pair of digital keys (PubK 2, PrivK 2)
a personal identification code (PIC), and
personal data of at least one user,
that the memory (19) of the set-top box (2)holds the following data after a first initialization:
only one key (PrivK 1) of the first pair of digital keys,
only one key (PubK 2) of the second pair of digital keys,
biometric data and personal data of a user encrypted with the only one key (PubK 2) of the second pair of digital keys, and the personal identification code (PIC)
that when establishing a connection between the remote control (1) and the set-top box (2) the identification device (14) reads biometric data of the user, adds to these data the personal identification code (PIC) and the other key (PrivK 2) of the second pair of digital keys,
reads out from the memory (19, 20), the encrypted biometric data, the encrypted personal data and the encrypted personal identification code (PIC) and decodes them with the other key (PrivK 2) of the second pair of digital codes, compares the received decrypted personal identification code and the decrypted stored personal identification code with each other and if they match compares the received decrypted biometric data and the stored decrypted biometric data with each other and only if they match unlocks the set-top box (2).

3. Multimedia assembly according to claim 2, **characterized in that** the biometric data transmitted from the identification means (14) of the remote control (1) are compressed prior to the transmission to the set-top box (2).

4. Multimedia assembly according to claim 3, **characterized in that** the compressing is carried out according to the Huffman code.

5. Multimedia arrangement according to one of claims 2 to 4, **characterized in that** data to be transmitted. from the remote controller (1) to the set-top box (2) is block-coded.

6. Multimedia arrangement according to one or more of claims 2 to 4, **characterized in that** the data-set to be transmitted from the remote controller (1) to the set-top box (2) is provided with a forward error correction.

## Revendications

1. Agencement multimédia ayant une télécommande (1), laquelle comprend
- un clavier (4),
- un premier microprocesseur (11),
- au moins une première mémoire (12),
- un dispositif d'identification (14), lequel contient des données biométriques d'une personne, et
- une unité d'émission et de réception (15) pour transmettre des données de façon bidirectionnelle,
ayant un boîtier de commande (2), lequel comprend
- un second microprocesseur (18),
- une seconde unité d'émission et de réception (17),
- au moins une seconde mémoire (19, 20) pour mémoriser un profil d'utilisateur, et
- au moins une interface (22, 24),
et ayant un dispositif d'affichage (3), lequel est relié au boîtier de commande (2),
**caractérisé**
- **en ce que** le clavier (4) de la télécommande (1) comprend seulement six touches (5, 6, 7, 8, 9,10), auxquelles sont affectées les fonctions HAUT (5), BAS (6), GAUCHE (7), DROITE (8), SELECTION (9) et RETOUR (10),
- **en ce que** toutes les fonctions du boîtier de commande (2) sont commandées selon trois niveaux de menu, dans lesquels peuvent être choisis
- dans le premier niveau de menu, un groupe sujet,
- dans le second niveau de menu, un objet,
- dans le troisième niveau de menu, une action à réaliser avec le sujet, cette répartition étant respectée pour toutes les fonctions,
- **en ce que** les éléments des groupes sujets, desobjets ou desactions sont affichés selon des champs sur le dispositif d'affichage (3) dans une colonne verticale (31) et une ligne horizontale (32) qui se coupent selon un champ de mise au point (33),
- **en ce que** le second microprocesseur (18), à réception de signaux de commande provenant de la télécommande (1), en fonction de l'actionnement des touches (5, 6, 7, 8), délivre au dispositif d'affichage (3) des signaux tels que des éléments des champs de la colonne (31) et de la ligne (32) sont placés dans le champ de focalisation (33), de sorte que le champ de focalisation (33) est fixe,
- **en ce que** l'élément qui se trouve dans le champ de focalisation (33) peut être activé par la touche de sélection (9),
- **en ce que** les éléments affichés dans les champs de la colonne (31) et de la ligne (32) sont configurés, en fonction des signaux reçus du dispositif d'identification (14), en interaction avec les données mémorisées dans une base de données d'utilisateurs (20) du boîtier de commande (2),
- **en ce que** la télécommande (1) comprend un lecteur de carte SIM (13), dans lequel une carte SIM peut être insérée, et en ce que la télécommande (1) et le boîtier de commande (2) ne libèrent une liaison de communication bidirectionnelle (16) entre les première et seconde unités d'émission et de réception (15, 17) que lorsqu'une carte SIM prédéterminée est insérée dans le lecteur de carte SIM (13) de la télécommande (1), et
- **en ce que** le boîtier de commande est agencé de façon à personnaliser les menus pour la personne, de façon que la personne soit identifiée selon ses données biométriques, et de façon que la personnalisation comprenne la suppression de certaines fonctions non désirées et/ou non autorisées,
- **en ce que** le microprocesseur (18) du boîtier de commande (2) est configuré de façon que les signaux des touches (5-10) ne sont traités que lorsque le dispositif d'identification (14) de la télécommande (1) a transmis au boîtier de commande (2) des signaux prédéterminés qui correspondent aux signaux de la base de données d'utilisateurs (20),
- **en ce que** le boîtier de commande (2) comprend un lecteur de carte SIM (21) et en ce que le microprocesseur (18) du boîtier de commande (2) est configuré de manière que l'activation de la liaison de communication (16) ne se produit que lorsqu'une carte SIM est insérée dans le lecteur de carte SIM (21) du boîtier de commande (2).

2. Agencement multimédia selon la revendication 1, **caractérisé**
**en ce que** sur la carte SIM du lecteur de carte SIM (13) de la télécommande (1) les données suivantes sont mémorisées :
- une première paire de clés numériques (PubK 1, PrivK 1),
- une seconde paire de clés numériques (PubK 2, PrivK 2),
- un code d'identification personnel (PIC), et
- des données personnelles pour au moins un utilisateur,
**en ce que** la mémoire (19) du boîtier de commande(2) contient les données mémorisées suivantes à l'issue d'une première initialisation :
- seulement une clé (PrivK 1) de la première paire de clés numériques,
- seulement une clé (PubK 2) de la seconde paire de clés numériques,
- des données biométriques et des données personnelles d'un utilisateur, ainsi que le code d'identification personnel (PIC), cryptés par laquelle seulement une clé (PubK 2) de la seconde paire de clés numériques,
**en ce que**, lors de l'établissement d'une connexion entre la télécommande (1) et le boîtier de commande (2), le dispositif d'identification (14) lit les données biométriques de l'utilisateur et les ajoute au code d'identification personnel (PIC) et à l'autre clé (PrivK 2) de la seconde paire de clés numériques,
extrait de la mémoire (19, 20) les données biométriques cryptés, les données personnelles cryptés et le code d'identification personnel (PIC) crypté et les décrypte avec l'autre clé (PrivK 2) de la seconde paire de clés numériques, compare l'un à l'autre le code d'identification personnel décrypté reçu et le code d'identification personnel décrypté mémorisé et, s'ils se correspondent, compare les unes aux autres les données biométriques décryptés reçues et les données biométriques décryptés mémorisées et n'active le boîtier de commande (2) que si elles se correspondent.

3. Agencement multimédia selon la revendication 2, **caractérisé en ce que** les données biométriques déterminées sont compressées par le dispositif d'identification (14) de la télécommande (1) avant leur transmission au boîtier de commande (2).

4. Agencement multimédia selon la revendication 3, **caractérisé en ce que** la compression est effectuées selon le codage Hoffmann.

5. Agencement multimédia selon l'une des revendications 2 à 4, **caractérisé en ce que** l'ensemble de données à transmettre de la télécommande (1) au boîtier de commande (2) est codé en bloc.

6. Agencement multimédia selon une ou plusieurs des revendications 2 à 4, **caractérisé en ce que** l'ensemble de données à transmettre de la télécommande (1) au boîtier de commande (2) comprend une correction d'erreur d'envoi
